# EUROPÄISCHE PATENTANMELDUNG

(11) **EP 2 916 624 A2**
(43) Veröffentlichungstag der Anmeldung: **09.09.2015**
(21) Anmeldenummer: 15000563.5
(22) Anmeldetag: 27.02.2015
(51) Int. Cl.: H05B 37/02

(54) **Verfahren zum automatisierten Betätigen zumindest einer ersten Lichtquelle und zumindest einer zweiten Lichtquelle**

(30) Priorität: 06.03.2014 DE 202014001980 U; 12.02.2015 DE 102015001648
(71) Anmelder: Brück, Dietmar Friedrich, Hongkong (HK)
(72) Erfinder: Brück, Dietmar Friedrich, Hongkong (HK)
(74) Vertreter: Rebbereh, Cornelia

(57) **Zusammenfassung**

Bei einem Verfahren zum automatisierten Betätigen zumindest einer ersten Lichtquelle einer Raumbeleuchtung und zumindest einer zweiten Lichtquelle eines Nacht- und/oder Orientierungslichts sieht die automatisierte Betätigung einen Halbautomatikmodus und einen Vollautomatikmodus vor, wobei durch einmalige Betätigen einer Betätigungseinrichtung und/oder über eine Zeitsteuerung und/oder über eine Helligkeitssteuerung ein Wechsel zwischen den Modi aktiviert wird.

## Beschreibung

Die Erfindung betrifft ein Verfahren zum automatisierten Betätigen zumindest einer ersten Lichtquelle einer Raumbeleuchtung und zumindest einer zweiten Lichtquelle eines Nacht- und/oder Orientierungslichts. Die Erfindung betrifft ferner eine Schalter-Melder-Einheit sowie eine Melder-Einheit zum bedarfsabhängigen Ein- und/oder Ausschalten und/oder Dimmen zumindest einer ersten Lichtquelle einer Raumbeleuchtung und zumindest einer zweiten Lichtquelle eines Nacht- und/oder Orientierungslichts, umfassend zumindest eine Einrichtung zum Erkennen einer Bewegung und/oder der Präsenz einer Person in einem Raum sowie zumindest eine Einrichtung zum Erfassen der Helligkeit in dem Raum und zumindest eine Steuerungseinheit zum Ansteuern der zumindest einen ersten Lichtquelle und der zumindest einen zweiten Lichtquelle.

Verfahren zum automatisierten Betätigen zumindest einer Raumbeleuchtung sind im Stand der Technik bekannt. Ein automatisiertes Betätigen zumindest einer Raumbeleuchtung erfolgt üblicherweise präsenzabhängig. Bei Detektieren der Präsenz einer Person in einem Raum wird automatisch die zumindest eine Raumbeleuchtung eingeschaltet. Hierdurch ist kein manuelles Einschalten der Raumbeleuchtung mehr erforderlich, das bei anderen herkömmlichen Lichtschaltern häufig schwierig ist, wenn bei Betreten eines dunklen Raumes ein herkömmlicher Lichtschalter nicht sofort aufgefunden wird, sondern vielmehr nach diesem mühsam getastet werden muss, bevor die Raumbeleuchtung über diesen eingeschaltet werden kann. Als Melder-Einheiten sind Bewegungs- und Präsenzmelder bekannt. Diese dienen dem Detektieren der Präsenz und/oder der Bewegung einer Person in einem überwachten bzw. Detektionsbereich eines Raumes. Bei Detektieren der Präsenz und/oder der Bewegung einer Person in dem Detektionsbereich wird von der Melder-Einheit ein Signal ausgesandt, mittels dessen die Raumbeleuchtung eingeschaltet wird. Ist in der Melder-Einheit ein Infrarot-Sensorelement vorgesehen, kann das Ein- und Ausschalten der Raumbeleuchtung auch gesteuert über die Wärmestrahlung von Personen oder anderen Wärmequellen, die sich im Detektions- bzw. Erfassungsbereich des jeweiligen Sensorelementes aufhalten oder bewegen, erfolgen. Wird durch die Melder-Einheit in dem überwachten Detektionsbereich nicht mehr die Anwesenheit einer Person festgestellt, kann ein entsprechendes Signal zum Ausschalten der Raumbeleuchtung ausgegeben werden.

Bekannt ist es ferner, die automatisierte Ansteuerung der Raumbeleuchtung unter Abfragen eines lichtabhängigen bzw. umgebungshelligkeitssensitiven Sensors vorzunehmen, wie unter Zuhilfenahme eines lichtabhängigen Widerstandes (LDR), einer Fotodiode oder eines Umgebungshelligkeitssensors die Umgebungshelligkeit zu messen. Zwischen einem Bewegungsmelder und einem Präsenzmelder besteht hierbei der funktionelle Unterschied, dass bei einer Melder-Einheit in Form eines Bewegungsmelders Dunkelheit in einem Raum erkannt und bei Detektieren einer Bewegung beispielsweise die zumindest eine Lichtquelle der Raumbeleuchtung eingeschaltet wird. Im Unterschied dazu wird bei einer Melder-Einheit in Form eines Präsenzmelders bei Erreichen einer vorgegebenen Helligkeitsschwelle in einem überwachten Raum das Kunstlicht, das von der im Raum befindlichen Raumbeleuchtung ausgesandt wird, wieder ausgeschaltet. Hierdurch wird eine unnötige Beleuchtung des Raumes durch Kunstlicht vermieden und Energie eingespart, da die Raumbeleuchtung nur dann eingeschaltet bleibt, wenn dies auch erforderlich ist.

Bei den existierenden Verfahren zum automatisierten Betätigen einer Raumbeleuchtung wäre es wünschenswert, diese noch weiter im Hinblick auf eine auch energieoptimiertere und vereinfachte Ansteuerung zu verbessern.

Der vorliegenden Erfindung liegt daher die Aufgabe zugrunde, ein Verfahren zum automatisierten Betätigen zumindest einer ersten Lichtquelle einer Raumbeleuchtung und zumindest einer zweiten Lichtquelle eines Nacht- und/oder Orientierungslichts vorzusehen, das einen hohen Wohnkomfort bei möglichst niedrigem Energiebedarf und optimaler Beleuchtung von Räumen jeglicher Art insbesondere über den Verlauf eines Tages hinweg ermöglicht.

Die Aufgabe wird für ein Verfahren nach Anspruch 1 dadurch gelöst, dass die automatisierte Betätigung einen Haltautomatikmodus und einen Vollautomatikmodus vorsieht, wobei durch einmaliges Betätigen einer Betätigungseinrichtung und/oder über eine Zeitsteuerung und/oder über eine Helligkeitssteuerung ein Wechsel zwischen den Modi aktiviert wird. Für eine Schalter-Melder-Einheit oder eine Melder-Einheit zum bedarfsabhängigen Ein- und/oder Ausschalten und/oder Dimmen zumindest einer ersten Lichtquelle einer Raumbeleuchtung und zumindest einer zweiten Lichtquelle eines Nacht- und/oder Orientierungslichts, umfassend zumindest eine Einrichtung zum Erkennen einer Bewegung und/oder der Präsenz einer Person in einem Raum sowie zumindest eine Einrichtung zum Erfassen der Helligkeit in dem Raum und zumindest einer Steuerungseinheit zum Ansteuern der zumindest einen ersten Lichtquelle und der zumindest einen zweiten Lichtquelle wird die Aufgabe dadurch gelöst, dass die Ansteuerung durch die zumindest eine Steuerungseinheit nach dem vorstehend genannten Verfahren erfolgt. Weiterbildungen der Erfindung sind in den abhängigen Ansprüchen definiert.

Dadurch wird ein Verfahren zum automatisierten Betätigen zumindest einer ersten Lichtquelle einer Raumbeleuchtung und zumindest einer zweiten Lichtquelle eines Nacht- und/oder Orientierungslichts geschaffen, das zwei Betätigungsmodi aufweist, nämlich einen Halbautomatikmodus und einen Vollautomatikmodus. Ein Wechsel zwischen diesen beiden Modi erfolgt durch einmaliges Betätigen einer Betätigungseinrichtung, wie eines Tasters oder Schalters. Die Betätigungseinrichtung kann außerhalb einer Melder-Einheit angeordnet und an die Melder-Einheit angeschlossen oder in einer Schalter-Einheit integriert sein. Ein einmaliges Betätigen der Betätigungseinrichtung reicht aus, um von dem Halbautomatikmodus in den Vollautomatikmodus oder umgekehrt von dem Vollautomatikmodus in den Halbautomatikmodus zu wechseln, wobei der Wechsel vom Vollautomatikmodus in den Halbautomatikmodus bei eingeschalteter erster Lichtquelle der Raumbeleuchtung erfolgt. Ein Wechsel zwischen den Modi lediglich durch einmaliges Betätigen der Betätigungseinrichtung ist für einen Benutzer daher sehr komfortabel, da auf einfache Art und Weise ein der gewünschten Aktivität in einem Raum angepasster automatisierter Beleuchtungsmodus eingestellt bzw. auf diesen gewechselt werden kann.

Ferner ist es aber auch möglich, einen Wechsel über eine Zeitsteuerung zu steuern, wobei nach Ablauf einer vorgebbaren Zeitspanne ein Wechsel vom Vollautomatikmodus in den Halbautomatikmodus vorgesehen wird bzw. zu einem vorbestimmbaren oder vorbestimmten Zeitpunkt ein Wechsel vom Halbautomatikmodus in den Vollautomatikmodus. Ebenfalls ist ein Wechsel zwischen den Modi über eine Helligkeitssteuerung möglich, wobei bei Erreichen vorgebbarer Lichtwerte bzw. Helligkeitswerte automatisch ein Umschalten zwischen den beiden Modi erfolgt. Für die Helligkeitssteuerung wird der aktuelle Lichtwert in einem Raum gemessen und mit vorgegebenen Lichtwerten verglichen. Je nach dem Ergebnis des Vergleichs erfolgt ein Dimmen der ersten Lichtquelle der Raumbeleuchtung und/oder der zweiten Lichtquelle des Nacht- und/oder Orientierungslichts, das zu einem Leuchten von dieser oder diesen mit einer größeren oder geringeren Lichtstärke führt, und/oder einem Umschalten in den jeweils anderen Modus (Halbautomatikmodus/Vollautomatikmodus).

Durch Aktivieren des Halbautomatikmodus wird beim Wechsel vom Vollautomatikmodus in den Halbautomatikmodus bei eingeschalteter erster Lichtquelle der Raumbeleuchtung die zumindest eine zweite Lichtquelle des Nacht- und/oder Orientierungslichts eingeschaltet und die zumindest eine erste Lichtquelle der Raumbeleuchtung ausgeschaltet. Ein automatisiertes Einschalten der zumindest einen ersten Lichtquelle der Raumbeleuchtung im Halbautomatikmodus erfolgt nicht. Die zumindest eine zweite Lichtquelle des Nacht- und/oder Orientierungslichts wird in dem Halbautomatikmodus hingegen automatisch geschaltet. Dies bedeutet, dass beispielsweise helligkeitsabhängig die zumindest eine zweite Lichtquelle mit verschiedenen Lichtstärken automatisch eingeschaltet oder gedimmt wird. Im Halbautomatikmodus kann somit bei einem Unterschreiten eines vorgegebenen Helligkeitswertes automatisch die zumindest eine zweite Lichtquelle des Nacht- und/oder Orientierungslichts mit einer ersten geringeren Lichtstärke eingeschaltet werden. Bei Erkennen einer Bewegung oder Präsenz einer Person im Raum bzw. dem Erfassungsbereich, der insbesondere von einer Melder-Einheit oder einer Schalter-Melder-Einheit überwacht wird, wird die zumindest eine zweite Lichtquelle dahingehend angesteuert, dass sie Licht mit einer zweiten höheren Lichtstärke aussendet. Zeitabhängig kann nachfolgend ein Umschalten in ein Leuchten mit der ersten Lichtstärke vorgesehen werden. Beispielsweise kann nach Ablauf einer vorgebbaren oder vorgegebenen Nachlaufzeit die zumindest eine zweite Lichtquelle wieder mit der ersten Lichtstärke leuchten, so dass hierdurch ein Nachtlicht vorgesehen werden kann. Insbesondere während der Nachlaufzeit, in der die zumindest eine zweite Lichtquelle des Nacht- und/oder Orientierungslichts Licht mit der zweiten Lichtstärke aussendet, kann vorteilhaft durch manuelles Betätigen der Betätigungseinrichtung die zumindest eine erste Lichtquelle der Raumbeleuchtung eingeschaltet und von dem Halbautomatikmodus in den Vollautomatikmodus gewechselt werden. Vorteilhaft wird hierbei die zumindest eine erste Lichtquelle der Raumbeleuchtung helligkeitsgesteuert und/oder präsenzgesteuert ein- und ausgeschaltet oder gedimmt. Im Vollautomatikmodus wird somit die zumindest eine erste Lichtquelle der Raumbeleuchtung helligkeitsabhängig und/oder präsenzgesteuert ein- und ausgeschaltet oder gedimmt, wobei, um eine noch bessere Energieeinsparwirkung zu erzielen, der Betrieb im Vollautomatikmodus vorteilhaft zeitgesteuert erfolgen kann. Nach Ablauf einer vorgegebenen Zeit kann hierbei ein automatisiertes Umschalten vom Vollautomatikmodus in den Halbautomatikmodus erfolgen unter Ausschalten, insbesondere gedimmtem Ausschalten, der zumindest einen ersten Lichtquelle der Raumbeleuchtung.

Als weiter vorteilhaft erweist es sich, nach zeitabhängigem Beenden des Vollautomatikmodus durch einmaliges Betätigen der Betätigungseinrichtung diesen zu reaktivieren. Dies bedeutet, dass dann, wenn nach einer vorgegebenen Zeitspanne der Vollautomatikmodus beendet wurde und dementsprechend in den Halbautomatikmodus zurückgekehrt wurde, der Vollautomatikmodus sich durch einmaliges Betätigen der Betätigungseinrichtung wieder aufrufen lässt. Auch dies führt zu einer sehr komfortablen Art der Ansteuerung bzw. des Moden-Wechsels.

Als weiter vorteilhaft erweist es sich, dass bei Betrieb im Vollautomatikmodus durch einmaliges Betätigen der Betätigungseinrichtung bei eingeschalteter erster Lichtquelle der Raumbeleuchtung von dem Vollautomatikmodus in den Halbautomatikmodus gewechselt werden kann, wobei im Halbautomatikmodus die zumindest eine erste Lichtquelle der Raumbeleuchtung nur manuell einschaltbar ist und die zumindest eine zweite Lichtquelle des Nacht- und/oder Orientierungslichts präsenzabhängig und/oder helligkeitsabhängig und/oder zeitabhängig gesteuert wird. Im Halbautomatikmodus ist es somit grundsätzlich möglich, die zumindest eine erste Lichtquelle der Raumbeleuchtung manuell einzuschalten und in den Vollautomatikmodus zu wechseln. Die zumindest eine zweite Lichtquelle des Nacht- und/oder Orientierungslichts wird im Halbautomatikmodus in Abhängigkeit der Präsenz einer Person in einem Raum, der vorhandenen Helligkeit und ggf. auch in Abhängigkeit von vorgegebenen Zeiteinheiten, innerhalb derer die zumindest eine zweite Lichtquelle des Nacht- und/oder Orientierungslichts ggf. mit unterschiedlichen Lichtstärken leuchten soll, automatisch gesteuert, ggf. hierbei auch gedimmt. Vorteilhaft können sowohl die zumindest eine erste Lichtquelle der Raumbeleuchtung als auch die zumindest eine zweite Lichtquelle des Nacht- und/oder Orientierungslichts dimmbar sein, somit mit unterschiedlichen Lichtstärken leuchten und hierbei gestuft in Richtung einer größeren Lichtstärke oder in Richtung einer kleineren Lichtstärke leuchtend angesteuert werden.

Jedes Ein- und Ausschalten der ersten und der zweiten Lichtquelle kann entweder abrupt oder unter Dimmen erfolgen.

Ferner kann ein Dimmen, also ein Wechsel zwischen den Lichtstärken oder -intensitäten auch in Abhängigkeit von der in dem Raum gewünschten Aktivität erfolgen.

Sowohl im Halbautomatikmodus als auch im Vollautomatikmodus wird bei einem Unterschreiten eines vorbestimmten Helligkeitswerts automatisch die zumindest eine zweite Lichtquelle des Nacht- und/oder Orientierungslichts mit einer ersten Lichtstärke eingeschaltet. Bei Erkennen einer Bewegung bzw. der Präsenz einer Person im Raum bzw. Erfassungsbereich einer Melder-Einheit oder Schalter-Melder-Einheit wird die zumindest eine zweite Lichtquelle dahingehend angesteuert, dass sie. Licht mit einer zweiten Lichtstärke aussendet. Nach Ablauf einer vorgebbaren oder vorgegebenen Nachlaufzeit leuchtet die zumindest eine zweite Lichtquelle wieder mit der ersten Lichtstärke. Wird während der Nachlaufzeit, in der die zumindest eine zweite Lichtquelle Licht mit der zweiten Lichtstärke aussendet, durch manuelles Betätigen eines Schalter- bzw. Tasterelements die zumindest eine erste Lichtquelle der Raumbeleuchtung eingeschaltet, so wird die zumindest eine zweite Lichtquelle des Nacht- und/oder Orientierungslichts ausgeschaltet. Sobald die erste Lichtquelle der Raumbeleuchtung ausgeschaltet wird, sei es manuell durch Betätigen des Schalter- bzw. Tasterelements oder automatisch nach Ablauf der Nachlaufzeit, kann die zumindest eine zweite Lichtquelle z.B. wieder mit der ersten Lichtstärke leuchten.

Bei Unterschreiten eines vorgegebenen Helligkeitswertes wird die zweite Lichtquelle als Nachtlicht eingeschaltet, sowohl im Vollautomatikmodus als auch im Halbautomatikmodus. Bei Bewegung wird im Vollautomatikmodus die erste Lichtquelle der Raumbeleuchtung eingeschaltet, im Halbautomatikmodus die zweite Lichtstärke der zweiten Lichtquelle als Orientierungslicht. Sowohl im Vollautomatikmodus als auch im Halbautomatikmodus wird innerhalb einer Nachlaufzeit bei Nichterkennen von Bewegung wieder die zweite Lichtquelle als Nachtlicht aktiviert. Bei Erkennen einer Präsenz und/oder Bewegung einer Person im Raum bzw. Erfassungsbereich einer Melder-Einheit oder Schalter-Melder-Einheit wird im Halbautomatikmodus die zumindest eine zweite Lichtquelle dahingehend angesteuert, dass sie Licht mit einer zweiten Lichtstärke aussendet. Im Vollautomatikmodus wird bei Erkennen einer Bewegung bzw. der Präsenz einer Person im Raum bzw. Erfassungsbereich einer Melder-Einheit oder Schalter-Melder-Einheit die zumindest eine erste Lichtquelle der Raumbeleuchtung eingeschaltet. Nach Ablauf einer vorgebbaren oder vorgegebenen Nachlaufzeit leuchtet die zumindest eine zweite Lichtquelle wieder mit der ersten Lichtstärke oder -intensität. Die Lichtstärke, insbesondere zwei unterschiedliche Lichtstärken, der zweiten Lichtquelle ist/sind dabei anwendungsspezifisch (frei) wählbar. Bevorzugt führt die erste Lichtstärke zu einem weniger hellen Leuchten der zweiten Lichtquelle als die zweite Lichtstärke, so dass mit der ersten Lichtstärke ein Nachtlicht und mit der zweiten Lichtstärke ein Orientierungslicht geschaffen werden kann. Des Weiteren können auch die Nachlaufzeiten sowohl für ein Nacht- als auch für ein Orientierungslicht anwendungsspezifisch (frei) gewählt werden. Die zumindest eine zweite Lichtquelle des Nacht- und/oder Orientierungslichts kann somit permanent mit einer vergleichsweise geringen Helligkeit, welche z.B. einer ersten Lichtstärke entspricht, leuchten und dabei als sog. Nachtlicht dienen, oder mit einer größeren Helligkeit, welche z.B. einer zweiten Lichtstärke entspricht, leuchten und dabei als sog. Orientierungslicht dienen.

Es kann zumindest eine Einrichtung zum Einstellen einer oder mehrerer Lichtstärken der zumindest einen zweiten Lichtquelle des Nacht- und/oder Orientierungslichts vorgesehen sein, wobei die Auswahl aus der Menge an eingestellten Lichtstärken durch die Steuerungseinheit erfolgen kann. Die Werte der Lichtstärken, die ausgewählt werden können, können über Einstelleinrichtungen, wie Potentiometer, eingestellt werden. Durch das Einstellen der Anzahl von Lichtstärke-Werten ergibt sich eine Menge an auswählbaren Lichtstärke-Werten, aus der die Steuereinheit je nach gewünschtem Leuchtmodus, z.B. dem Leuchtmodus eines Nachtlichts oder Orientierungsl ichts, eine geeignete Auswahl treffen kann. Ferner kann durch einen vorteilhaft vorgesehenen Helligkeitssensor die Umgebungshelligkeit in dem Raum, der beleuchtet werden soll, erfasst und mit einem vorgebbaren oder vorgegebenen Dämmerungsschwellwert verglichen werden. Sinkt die Umgebungshelligkeit im Raum unter den vorgegebenen Dämmerungsschwellwert, so kann die zumindest eine zweite Lichtquelle aktiviert werden, um Licht auszusenden. Auch dann, wenn eine Bewegung oder die Präsenz einer Person in dem Raum erkannt wird, kann die zumindest eine zweite Lichtquelle aktiviert oder von einer ersten vorgebbaren oder vorgegebenen Lichtstärke oder Lichtintensität zu einer zweiten vorgebbaren oder vorgegebenen Lichtstärke oder Lichtintensität, die z.B. höher als die erste ist, wechseln. Die zweite Lichtstärke kann ferner geringer als die erste Lichtstärke bzw. -intensität oder mit dieser gleich sein. Ohne Erfassen einer Bewegung oder Präsenz einer Person im Raum kann im Halbautomatikmodus bei Erfassen abnehmender Umgebungshelligkeit in dem überwachten Raum ein Einschalten der zumindest einen zweiten Lichtquelle des Nacht- und/oder Orientierungslichts mit einer ersten Lichtstärke oder Lichtintensität durch einen Helligkeitssensor ausgelöst werden.

Bei festgestellter Präsenz und/oder Bewegung einer Person in einem Raum durch ein Sensorelement kann im Vollautomatikmodus ein Signal zum Einschalten der zumindest einen ersten Lichtquelle der Raumbeleuchtung abgegeben werden bzw. durch die Auswertung einer Steuerungseinheit ein Präsenz- und/oder Bewegungssignal, das an einem Sensorelement erfasst wird, zum Einschalten der zumindest einen ersten Lichtquelle der Raumbeleuchtung durch die Steuerungseinheit und bei nicht mehr festgestelltem Präsenzsignal und/oder Bewegungssignal zum Ausschalten der zumindest einen ersten Lichtquelle der Raumbeleuchtung verwendet werden. Das Ausschalten der zumindest einen ersten Lichtquelle der Raumbeleuchtung kann mit einer vorgebbaren Nachlaufzeit erfolgen.

Im Vollautomatikmodus kann automatisch die zumindest eine erste Lichtquelle der Raumbeleuchtung vollständig eingeschaltet werden, wenn eine Bewegung oder Präsenz zumindest einer Person im Raum detektiert wird und auch Helligkeitssensoren ein Unterschreiten eines vorgebbaren Dämmerungsschwellwerts bzw. einer Helligkeitsschwelle detektieren. Wird keine weitere Bewegung im Raum bzw. auch keine Präsenz zumindest einer Person mehr im Raum festgestellt, kann nach Ablauf einer vorgebbaren Zeitspanne für ein Nachleuchten kontinuierlich oder stufenweise die von der zumindest einen ersten Lichtquelle der Raumbeleuchtung abgegebene Lichtmenge reduziert werden, ggf. bis auf Null herunter, also bis die zumindest eine erste Lichtquelle vollständig ausgeschaltet ist. Bei Unterschreiten eines vorbestimmten oder vorbestimmbaren Helligkeitsschwellwerts wird automatisch die zumindest eine zweite Lichtquelle des Nacht- und/oder Orientierungslichts eingeschaltet.

Die Raumbeleuchtung kann eine Anzahl von Lichtquellen umfassen, die üblicherweise entfernt von einer Melder-Einheit oder einer Schalter-Melder-Einheit an ein oder mehreren Stellen eines Raumes angeordnet und mit der Melder-Einheit oder der Schalter-Melder-Einheit verbunden sind.

Ein Beispiel einer speziellen Ausführungsvariante des Verfahrens zum automatisierten Betätigen zumindest einer ersten Lichtquelle einer Raumbeleuchtung und zumindest einer zweiten Lichtquelle eines Nacht- und/oder Orientierungslichts ist die Varianz der Betriebsmodi einer Wohnraumbeleuchtung über einen Tag hinweg. Hierbei kann in der Nacht durch Aktivieren des Halbautomatikmodus die zumindest eine zweite Lichtquelle des Nacht- und/oder Orientierungslichts automatisch, also präsenzabhängig und/oder helligkeitsabhängig und/oder zeitabhängig, geschaltet werden. Ein Einschalten der zumindest einen ersten Lichtquelle der Raumbeleuchtung wird in diesem Halbautomatikmodus vermieden, wobei grundsätzlich ein manuelles Einschalten von dieser zugelassen wird bzw. ist. Die Tatsache, dass der Zustand "Nacht" vorliegt, kann durch einen Helligkeitssensor abgefragt und einer Steuerungseinheit, in der das Verfahren durchgeführt wird, als Eingangssignal eingegeben werden.

Soll am Morgen die erste Lichtquelle der Raumbeleuchtung eingeschaltet werden, wird durch einmaliges Betätigen einer Betätigungseinrichtung beispielsweise in Form eines Tasters die zumindest eine erste Lichtquelle der Raumbeleuchtung eingeschaltet und zugleich vom Halbautomatikmodus in den Vollautomatikmodus gewechselt. Ab diesem Zeitpunkt wird die zumindest eine erste Lichtquelle der Raumbeleuchtung automatisch, also helligkeitsabhängig und/oder präsenzabhängig ein- und ausgeschaltet, insbesondere beim Wechsel vom Einschaltzustand in den Ausschaltzustand gedimmt. Dies bietet einen hohen Wohnkomfort, da an Tagen mit wenig Tageslichteinfall in den Raum bei Feststellen der Präsenz einer Personen in dem Raum die zumindest eine erste Lichtquelle der Raumbeleuchtung heller, das heißt mit einer größeren Lichtstärke, leuchtet als an Tagen mit größerem Tageslichteinfall in den Raum. Zusätzlich zu einem helligkeitsabhängigen und präsenzabhängigen Ein- und Ausschalten der zumindest einen ersten Lichtquelle der Raumbeleuchtung ist es möglich, im Vollautomatikmodus zusätzlich eine zeitliche Begrenzung von diesem vorzusehen, wodurch eine noch größere Energieeinsparung erzielt werden kann. Eine solche zeitliche Begrenzung des Vollautomatikmodus führt dazu, dass nach Ablauf einer vorgegebenen Zeitspanne die Steuerungseinheit von dem Vollautomatikmodus in den Halbautomatikmodus wechselt, so dass die zumindest eine erste Lichtquelle der Raumbeleuchtung nicht unnötig leuchtet und dabei Energie verbraucht.

Am Abend kann vorgesehen werden, dass die Steuerungseinheit entweder erneut durch einmaliges Betätigen der Betätigungseinrichtung, insbesondere in Form eines Tasters, in den Vollautomatikmodus wechselt oder sich noch in diesem befindet. Ein Wechsel in den Vollautomatikmodus ist dann erforderlich, wenn aufgrund Zeitablaufs, wie vorstehend beschrieben, automatisch von dem Vollautomatikmodus in den Halbautomatikmodus gewechselt wurde. Die Feststellung, wann der Zustand "Abend" vorliegt, kann wiederum durch eine interne Uhr oder durch Helligkeitsabfrage der Steuerungseinheit vorgegeben werden.

Vor dem Schlafengehen der in dem Raum befindlichen Personen kann durch einmaliges Betätigen der Betätigungseinrichtung, insbesondere in Form eines Tasters, bei eingeschalteter erster Lichtquelle der Raumbeleuchtung von dem Vollautomatikmodus in den Halbautomatikmodus gewechselt werden, so dass die zumindest eine erste Lichtquelle der Raumbeleuchtung nur manuell eingeschaltet werden kann und die zumindest eine zweite Lichtquelle des Nacht- und/oder Orientierungslichts wiederum automatisch angesteuert wird.

Neben den im Vorstehenden beschriebenen und in den Ausführungsbeispielen genannten Verfahren zum automatisierten Betätigen zumindest einer ersten Lichtquelle einer Raumbeleuchtung und zumindest einer zweiten Lichtquelle eines Nacht- und/oder Orientierungslichts können noch zahlreiche weitere vorgesehen werden, auch beliebige Kombinationen der genannten Merkmale, bei denen jeweils die automatisierte Betätigung einen Halbautomatikmodus und einen Vollautomatikmodus vorsieht, wobei durch einmaliges Betätigen einer Betätigungseinrichtung ein Wechsel zwischen den beiden Modi des Halbautomatikmodus und des Vollautomatikmodus aktiviert wird. Ein solcher Wechsel kann ferner auch über eine Zeitsteuerung und/oder über eine Helligkeitssteuerung aktiviert werden.

## Patentansprüche

1. Verfahren zum automatisierten Betätigen zumindest einer ersten Lichtquelle einer Raumbeleuchtung und zumindest einer zweiten Lichtquelle eines Nacht- und/oder Orientierungslichts,
wobei die automatisierte Betätigung einen Halbautomatikmodus und einen Vollautomatikmodus vorsieht, wobei durch einmaliges Betätigen einer Betätigungseinrichtung und/oder über eine Zeitsteuerung und/oder über eine Helligkeitssteuerung ein Wechsel zwischen den Modi erfolgt.

2. Verfahren nach Anspruch 1,
**dadurch gekennzeichnet, dass**
der Wechsel vom Vollautomatikmodus in den Halbautomatikmodus bei eingeschalteter erster Lichtquelle der Raumbeleuchtung erfolgt.

3. Verfahren nach Anspruch 1 oder 2,
**dadurch gekennzeichnet, dass**
für die Helligkeitssteuerung der aktuelle Lichtwert in einem Raum gemessen wird.

4. Verfahren nach einem der vorstehenden Ansprüche,
**dadurch gekennzeichnet, dass**
beim Wechsel vom Vollautomatikmodus in den Halbautomatikmodus die zumindest eine zweite Lichtquelle des Nacht- und/oder Orientierungslichts eingeschaltet und die zumindest eine erste Lichtquelle der Raumbeleuchtung ausgeschaltet wird.

5. Verfahren nach einem der vorstehenden Ansprüche,
**dadurch gekennzeichnet, dass**
bei Betrieb im Halbautomatikmodus durch einmaliges Betätigen der Betätigungseinrichtung die zumindest eine erste Lichtquelle der Raumbeleuchtung eingeschaltet und von dem Halbautomatikmodus in den Vollautomatikmodus gewechselt wird, wobei die zumindest eine erste Lichtquelle der Raumbeleuchtung helligkeitsgesteuert und/oder präsenzgesteuert ein- und ausgeschaltet oder gedimmt wird.

6. Verfahren nach einem der Ansprüche 3 bis 5,
**dadurch gekennzeichnet, dass**
nach zeitabhängigem Beenden des Vollautomatikmodus durch einmaliges Betätigen der Betätigungseinrichtung dieser reaktiviert wird.

7. Verfahren nach einem der vorstehenden Ansprüche,
**dadurch gekennzeichnet, dass**
bei Betrieb im Vollautomatikmodus und eingeschalteter erster Lichtquelle der Raumbeleuchtung durch einmaliges Betätigen der Betätigungseinrichtung von dem Vollautomatikmodus in den Halbautomatikmodus gewechselt wird, wobei im Halbautomatikmodus die zumindest eine erste Lichtquelle der Raumbeleuchtung nur manuell einschaltbar ist und die zumindest eine zweite Lichtquelle des Nacht- und/oder Orientierungslichts präsenzabhängig und/oder helligkeitsabhängig und/oder zeitabhängig gesteuert wird.

8. Verfahren nach einem der vorstehenden Ansprüche;
**dadurch gekennzeichnet, dass**
die zumindest eine erste Lichtquelle der Raumbeleuchtung und/oder die zumindest eine zweite Lichtquelle des Nacht- und/oder Orientierungslichts dimmbar ist.

9. Melder-Einheit oder Schalter-Melder-Einheit zum bedarfsabhängigen Ein- und/oder Ausschalten und/oder Dimmen zumindest einer ersten Lichtquelle einer Raumbeleuchtung und zumindest einer zweiten Lichtquelle eines Nacht- und/oder Orientierungslichts, umfassend zumindest eine Einrichtung zum Erkennen einer Bewegung und/oder der Präsenz einer Person in einem Raum sowie zumindest eine Einrichtung zum Erfassen der Helligkeit in dem Raum und zumindest eine Steuerungseinheit zum Ansteuern der zumindest einen ersten Lichtquelle und der zumindest einen zweiten Lichtquelle,
**dadurch gekennzeichnet, dass**
die Ansteuerung durch die zumindest eine Steuerungseinheit nach dem Verfahren nach einem der Ansprüche 1 bis 8 erfolgt.
